# EUROPEAN PATENT SPECIFICATION

(11) **EP 2 518 027 B1**
(45) Date of publication and mention of the grant of the patent: **25.10.2017**
(21) Application number: 12165612.8
(22) Date of filing: 26.04.2012
(51) Int. Cl.: C03B 5/027, H05B 3/03, C03B 5/167, F27D 11/04, F27D 11/10

(54) **Electrode holder for electric glass melting**
Elektrodenhalter für elektrischen Glasschmelzofen
Support d'électrode de fusion de verre électrique

(30) Priority: 26.04.2011 US 201113094182
(43) Date of publication of application: 31.10.2012
(73) Proprietor: Corning Incorporated, Corning, NY 14831 (US)
(72) Inventor: De Angelis, Gilbert, NY 14858 (US); Lineman, David M., NY 14870 (US)
(74) Representative: Anderson, James Edward George

(56) References cited:
- DE-A1- 3 040 150
- GB-A- 1 472 057
- US-A- 2 817 695
- US-A- 3 634 588
- US-A- 3 777 040
- US-A- 5 125 002

## Description

### BACKGROUND

### FIELD

The present invention related to an improved electrode holder for use during a glass melting operation, and more particularly to a refractory barrier layer deposited on a front portion of the electrode holder in contact with the molten glass.

### TECHNICAL BACKGROUND

The use of metals as well as conductive oxides and non-metallic materials, such as carbon as electrodes for resistive melting of glass is a well established technology. It is very common for cylindrical or rectangular sections of Molybdenum (Mo), carbon or tin oxide to be used as electrode materials. The problem with these materials, and Mo in particular, is that they are prone to rapid oxidation if operated in air or any oxidizing environment in excess of 500°C to 600°C. The oxidizing temperature range is well within the typical melting temperature of glass.

Normally, the portion of the electrode that is in the glass has a manageable rate of oxidation, because of the lower oxygen level in the glass. The portion of the electrode where oxidation is a concern is where the electrode comes through the wall of the melting furnace and out into the ambient atmosphere. This extension of the electrode through the melting furnace wall is necessary for electrical connections that are made to the electrode for powering. Because of the good thermal conductivity of the electrode material, there exists a portion of the electrode that is hotter than 500°C and is in contact with ambient atmosphere. This area is prone to oxidation. To prevent this oxidation, a number of methods to protect the electrode from oxidation have been developed. The most common method of oxidation protection is the use of an electrode holder or sleeve made from stainless steel or a super alloy to protect the Mo from oxidation. The electrode holders are typically water cooled to freeze glass around the electrode to prevent oxygen from contacting the hot material or to cool the electrode to the point where oxidation is stopped. The use of water cooling is a balancing act, because too much heat from the glass melting unit should not be removed, yet the electrode holder material should be cooled sufficiently to prevent it oxidation or corrosive attack from the glass.

For typical electrode installations for melting commercial glasses like soda lime, the temperature of the electrode holder is low enough that the corrosion of the electrode holder material is limited, thereby protecting the electrode holder, and electrode, from oxidation for a full tank campaign. With higher melting temperature glasses, such as those used for visual display applications, the temperature of the electrode holder is high enough that significant corrosion can occur. Once the electrode holder is corroded through, it no longer can serve as a barrier to prevent oxygen contact with the hot electrode material and its subsequent oxidation. If electrode oxidation is severe enough, the electrode necks down and fails and is no longer able to conduct electricity.

US 3,634,588 is directed to an electrode holder for an electrode of an electric glass furnace, the electrode having a cushion gasket of highly heat-resistant material located between the electrode holder and the furnace.

US 3,777,040 is directed to an oxidizable electrode assembly that projects vertically through a shouldered aperture in the ceramic of the bottom of an electric glass melting furnace.

US 5,125,022 is directed to a sealed connection for a sleeve and jacket for protecting a molybdenum electrode mounted through the wall of an electric glass furnace.

US 2,817,695 is directed to electric resistance furnaces for melting refractory mineral materials which include mechanisms for continuous tapping of the molten refractory mineral therefrom.

GB 1,472,057 is directed to electrodes for glass melting furnaces in which the electrode is protected from oxidation where it passes through the furnace tank wall by a protective sleeve assembly comprising a metal layer and a layer of viscous sealing material.

DE 3,040,150 is directed to an electrode holder in a base of a glass melting furnace in which a part of the holder can be replaced without interrupting the melting process.

### SUMMARY OF THE INVENTION

The invention provides an electrode holder according to claim 1, a furnace according to claim 5 and a method of forming a molten glass material according to claim 8. Optional features of the invention are set out in the dependent claims.

Analysis of stainless steel electrode holders operated at temperature in excess of 1300°C has shown the stainless steel in contact with an alumina borosilicate glass causes reduction of some oxides in the glass to their elemental state. In the elemental state, these materials can alloy with the stainless steel resulting in attack on the metal and the formation of low melting temperature alloys. From an iron-silicon phase diagram it can be seen that silicon in an iron based alloy, such as 310 stainless steel, will form low melting temperature phases that can significantly weaken the metal at high operating temperatures. By high operating temperatures what is meant is temperatures greater than about 1000°C, for example, greater than about 1100°C, greater than about 1200°C or greater than about 1300°C. At temperatures slightly above 1200°C, liquid Fe - Si phases are formed. Formation of these phases will totally destroy the strength of the electrode sleeve and render it incapable of preventing oxygen contact with the electrode. To overcome this limitation, a refractory barrier layer is deposited on those portions of the electrode holder most exposed to the molten glass material

In one embodiment, an electrode holder (10) for a glass melting furnace is disclosed comprising an outer wall (12), an inner wall (14) defining a channel (20) for receiving an electrode, a passage for receiving a flow of a coolant positioned between the outer wall and the inner wall, a nose member (16) joining the inner wall and the outer wall at a first end of the electrode holder and a refractory barrier layer (46) deposited on an outer surface of the nose. The passage may comprise a void or cavity within the electrode holder, or be, for example, a conduit contained within such void or cavity. Preferably the refractory barrier layer (46) extends along a circumferential portion of the inner wall. The barrier layer extends along a portion of the inner wall.

In some embodiment, the refractory barrier layer comprises zirconia or alumina, although other suitable refractory materials may be used, such as an alumina-titania material. A thickness of the refractory barrier layer is preferably equal to or greater than 100 µm. The refractory barrier layer may be deposited on the annular nose member by flame spraying or plasma spraying. In some embodiments High Velocity Oxygen Fuel (HVOF) thermal spray coating may be used to deposit the barrier layer. Preferably, a difference between a coefficient of thermal expansion of the barrier layer and a coefficient of thermal expansion of the annular nose member is no greater than an order of magnitude. The electrode holder may be fitted an inlet for receiving an oxygen-free gas and supplying the oxygen-free gas between the electrode and the inner wall.

In another embodiment, a furnace (52) for forming a molten glass material is disclosed comprising a refractory block (44) defining a passage therethrough, an electrode holder (10) positioned within the passage, the electrode holder comprising an outer wall (12), an inner wall (14) defining a channel (20) for receiving an electrode (22), a coolant passage (30, 40) for receiving a flow of a coolant positioned between the outer wall and the inner wall and a nose member (16) joining the inner wall and the outer wall at a first end of the electrode holder. The annular nose member comprises a refractory barrier layer (46) deposited on an outer surface thereof. In some embodiments the coolant passage comprises a conduit (30). However, the coolant may be circulated through a cavity within the electrode holder. During operation of the furnace, i.e. when heating a molten glass material using the electrode, the refractory barrier layer (46) is in contact with the molten glass material (48). Preferably, a thickness of the refractory barrier layer (46) is equal to or greater than 100 µm In some embodiments, the electrode holder (10) is positioned in a bottom wall (45) of the furnace, whereas in other embodiments, the electrode holder is positioned in a side wall of the furnace. The refractory barrier layer (46) may in some cases be deposited on at least a portion of the inner wall (14) of the electrode holder (10). Preferably, a difference between a coefficient of thermal expansion of the barrier layer and a coefficient of thermal expansion of the annular nose member (e.g. the substrate on which the barrier layer is deposited) is no greater than an order of magnitude.

In still another embodiment, a method of forming a molten glass material is described comprising heating a molten glass material in a vessel, the heating comprising flowing an electric current through an electrode (22) positioned within an electrode holder (10), the electrode holder comprising an outer wall (12), an inner wall (14) defining a channel (20) for receiving the electrode, a passage for receiving a flow of a coolant positioned between the outer wall and the inner wall, a nose member (16) joining the inner wall and the outer wall at a first end of the electrode holder and a refractory barrier layer (46) deposited on an outer surface of the annular nose. The method may further comprise flowing an oxygen-free gas such as nitrogen or helium between the inner wall (14) and the electrode during the heating.

Additional features and advantages of the invention will be set forth in the detailed description which follows, and in part will be readily apparent to those skilled in the art from that description or recognized by practicing the invention as described herein, including the detailed description which follows, the claims, as well as the appended drawings.

It is to be understood that both the foregoing general description and the following detailed description present embodiments of the invention, and are intended to provide an overview or framework for understanding the nature and character of the invention as it is claimed. The accompanying drawings are included to provide a further understanding of the invention, and constitute a part of this specification. The drawings illustrate various embodiments of the invention and, together with the description, serve to explain the principles and operations of the invention.

### BRIEF DESCRIPTION OF THE DRAWINGS

FIG. 1 is a longitudinal cross sectional view of an electrode holder according to an embodiment of the present invention;
FIG. 2 is a longitudinal cross sectional view of the electrode holder of FIG. 1, shown positioned within a refractory wall of a glass melting furnace;
FIG. 3 is a close-up longitudinal cross sectional view of a portion of the electrode holder of FIG. 2 and depicting a refractory layer deposited the electrode holder nose;
FIG. 4 is a perspective view of a portion of an electrode holder according to an embodiment of the present invention illustrating locations for a refractory insulating layer deposited on the nose and inner wall of the electrode holder.
FIG. 5 is a view of a melting furnace looking downward into the furnace and showing electrode holders mounted in the side walls and bottom (floor) of the furnace.

### DETAILED DESCRIPTION

In the following detailed description, for purposes of explanation and not limitation, example embodiments disclosing specific details are set forth to provide a thorough understanding of the present invention. However, it will be apparent to one having ordinary skill in the art, having had the benefit of the present disclosure, that the present invention may be practiced in other embodiments that depart from the specific details disclosed herein. Moreover, descriptions of well-known devices, methods and materials may be omitted so as not to obscure the description of the present invention. Finally, wherever applicable, like reference numerals refer to like elements.

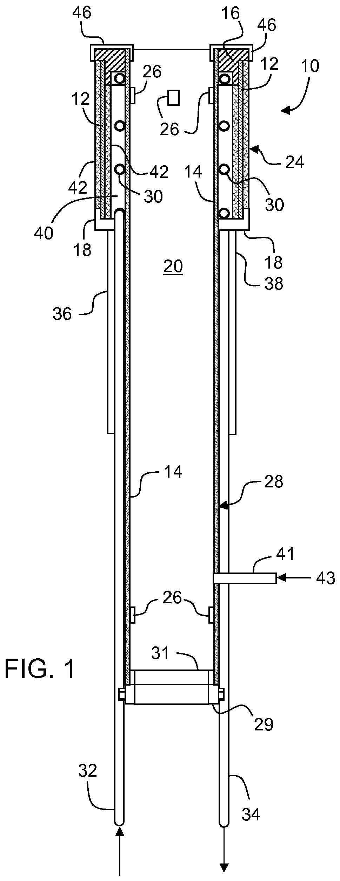

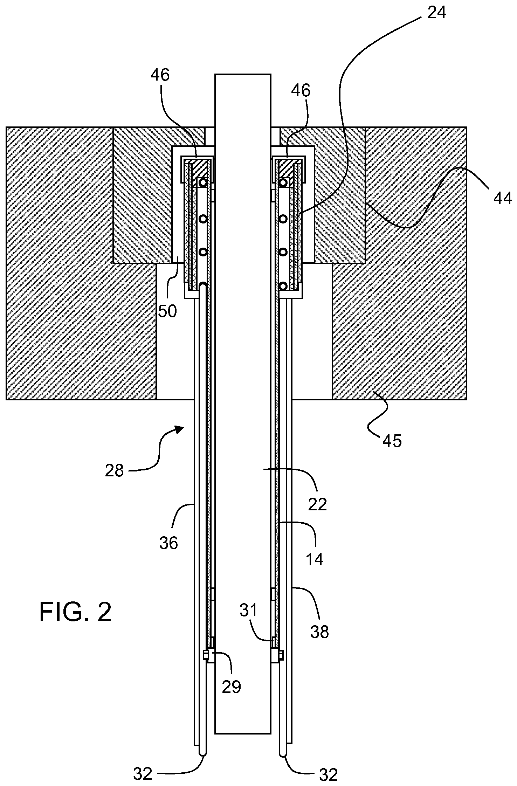

FIG. 1 depicts a longitudinal cross sectional view of an electrode holder 10 according to one embodiment. Electrode holder 10 is generally cylindrical in external shape and comprises an outer wall 12, an inner wall 14, an annular-shaped nose member 16 and an annular-shaped rear member 18. Outer wall 12 and inner wall 14 are tubular in shape. Nose member 16 and rear member 18 are preferably formed from a high temperature resistant metal. A suitable metal can be, for example, stainless steel such as 310 stainless steel. Both nose member 16 and rear member 18 join to outer wall 12 and inner wall 14. Inner wall 14 defines a central hollow cavity or channel 20 within which electrode 22 (see FIG. 2) is mounted. Together, outer wall 12, inner wall 14, nose member 16 and rear member 18 comprise head 24 of electrode holder 10. Inner wall 14 can include spacing members 26 to support the electrode within channel 20, to provide electrical insulation between the electrode 22 and inner wall 14 and to minimize surface contact with inner wall 14, thereby making it easier to move electrode 22 within channel 20. In some embodiments, a portion of inner wall 14 can extend rearward from head 24 and comprise tail 28 of electrode holder 10.

Head 24 further comprises a conduit 30 positioned between outer wall 12 and inner wall 14 through which a liquid coolant, such as water, can be flowed to cool electrode holder 10 and electrode 22. Conduit 30 may comprise, for example, a helically wound tube. It should be noted, however, that conduit 30 may comprise linear portions, curved portions, or a combination of both linear and curved portions. Preferably, conduit 30 is proximate to inner wall 14 to maximize cooling of the electrode, however it is also preferred that the conduit is not rigidly attached to the inner wall along its full length to accommodate thermal expansion during heat-up and cool-down of the electrode holder. Liquid supply line 32 and liquid discharge line 34 are connected with conduit 30 and supply the conduit with cooling liquid from a source (not shown).

In addition to conduit 30, a gaseous coolant may also be circulated through head 24 by gas supply line 36 and gas discharge line 38. For example, air may be supplied under pressure through gas supply line 36 into cavity 40 between outer wall 12 and inner wall 14, and removed from the cavity through gas discharge line 38.

It should be noted that other cooling configurations are also possible and within the scope of the present disclosure. For example, in some embodiments conduit 30 could be omitted and the cooling liquid circulated through cavity 40 without the use of a gaseous cooling medium. In other embodiments, a hybrid cooling medium comprising a liquid entrained in a gas could be injected, either into conduit 30 or cavity 40. In another embodiment either a gaseous, or hybrid coolant could be circulated within cavity 40. It should be noted that in accordance with embodiments of the present invention, head 24 is cooled by a cooling medium, the cooling medium being a liquid, a gas, both liquid and gas, or a mixture of liquid and gas. The cooling medium is flowed through a passage within head 24, for example, within conduit 30 or within cavity 40.

In still other embodiments, a reducing gas, or a non-oxidizing gas, could optionally be supplied to channel 20 between the electrode and inner wall 14. For example, nitrogen, or an inert gas such as helium could be supplied to channel 20 through inlet 41, either during a start-up phase of the melting process, or during steady state operation, as indicated by arrow 43.

Head 24 may further include a layer of thermal insulating material 42 positioned between outer wall 12 and inner wall 14. Thermal insulating material 42 may be, for example, a fibrous ceramic insulating material such as a fibrous alumina. In some embodiments, a second layer of fibrous inorganic insulating material may be wrapped around an exterior surface of outer wall 12. For example, the wrapped insulating material may extend up to, but not over, nose member 16.

If electrode holder 10 includes an extended inner wall 14 that forms a tail 28 extending rearward from head 24, tail 28 may comprises a rear block 29 having an annular shape. In some embodiments, electrode 22 may be fitted with a collar 31 that is clamped to electrode 22 via one or more screws, and engagement of the collar with rear block 29 prevents the electrode from falling out of the electrode holder, particularly when the electrode holder is positioned in a vertical orientation at the bottom of the melting vessel.

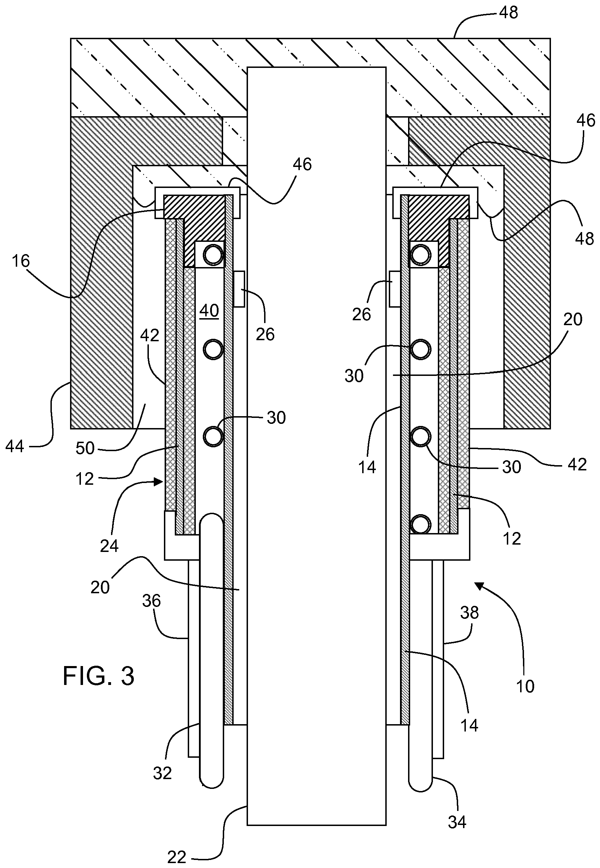

As illustrated in FIGS. 2 and 3, electrode holder 10 is positioned within a refractory block 44 that comprises a wall of the melting vessel. In the embodiment of FIGS 2 and 3, the electrode holder is shown positioned within a refractory block comprising a refractory floor or bottom wall 45 of a furnace. In other embodiments, the electrode holder may be positioned within a refractory block comprising a side wall of a furnace. Because portions of the outer surface of nose member 16 may be exposed to molten material at a temperature equal to or greater than 500°C, a refractory material is deposited as refractory barrier layer 46 on those portions of the outer surface of nose member 16 most likely to contact the molten glass. Deposition may be by flame deposition or plasma deposition. For example, in a plasma spraying process, the material to be deposited is fed into a plasma stream where the material is melted and accelerated toward the object to be coated. The temperature of the plasma stream can be as high as 10,000K. The material to be deposited impacts the object and forms small flattened deposits called lamellae. The lamellae accumulate and form a coating to the desired thickness. By adjusting such parameters as plasma composition, plasma flow rate, offset distance of the plasma torch generating the plasma stream from the target object, characteristics of the coating can be modified to achieve the desired porosity, thermal conductivity, electrical conductivity, strain tolerance and so forth. Another method for depositing the coating is High Velocity Oxygen Fuel (HVOF) thermal spray coating, which gives a denser coating than plasma spraying. Since the build-up of lamellae typically results in voids, cracks and incomplete bonding, thermally sprayed coatings typically have low thermal conductivity, thereby improving their insulating capability. The thickness of refractory barrier layer 46 deposited on the outside surface of nose member 16 should be equal to or greater than 100 µm, equal to or greater than 200 µm, equal to or greater than 300 µm or equal to or greater than 400 µm. Suitable material that can be used to form refractory barrier layer 46 include, but are not limited to aluminum oxide (alumina), zirconium oxide (zirconia) and alumina-titania. Preferably, a coefficient of thermal expansion of the refractory barrier layer is close to or equal to the coefficient of thermal expansion of the underlying substrate, i.e. nose member 16 to avoid spalling of the barrier layer. For example, in some embodiments, nose member 16 is formed from 310 stainless steel, which has a linear coefficient of thermal expansion (CTE) at 1000°C of about1.9x10⁻⁶/°C and alumina has a CTE of about 8.2x10⁻⁶/°C at 1000°C. Preferably, a CTE of the barrier layer is within an order of magnitude of the CTE of the underlying substrate. That is, preferably the CTE of the barrier layer is no more than about 10 times more than the CTE of the nose member or no less than about 10 times less than the CTE of the nose member.

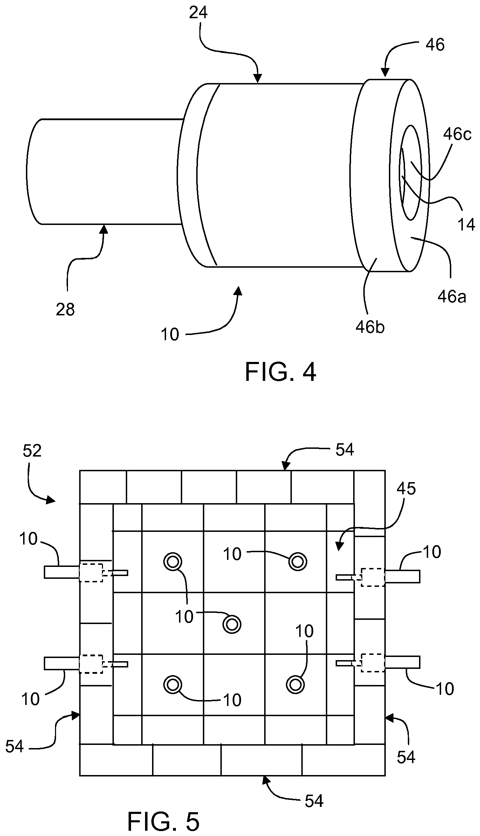

In addition to the front outside surface of nose member 16, refractory barrier layer 46 may also be deposited on other surfaces. Thus, refractory barrier layer 46 may comprise a portion 46a deposited on a front surface of nose member 16, an outer circumferential portion 46b, and a portion 46c deposited over inner wall 14 as shown in FIG. 4.

FIG. 5 is a top-down view of furnace 52 for melting a batch material to form glass, the furnace having electrode holders mounted in both bottom wall 45 and side walls 54 of the furnace. Other embodiments may have electrode holders mounted in only the side walls or only the floor of the melting furnace.

During the early stages of the melting process, cooling to electrode holder is reduced or turned off, allowing relatively low viscosity molten glass material 48 to flow into space 50 between refractory block 44 and electrode holder 10 (and between refractory block 44 and electrode 22), as best shown in FIG. 3. Molten glass material may also flow into channel 20, which, when the electrode is mounted within the channel, takes on the shape of an annulus. When molten glass material has flowed into such interstitial regions as space 50 and channel 20, cooling is returned to the electrode holder, and the viscosity of the molten glass material located in the interstitial spaces between the electrode holder and the refractory block, and between the electrode holder inner wall and the electrode is increased, freezing the glass material surrounding the electrode holder and forming a seal between the electrode holder and the refractory, and between the electrode holder and the electrode.

In certain instances it may become necessary to extend the electrode farther into the molten glass material, at which time cooling is reduced or cut off, allowing the previously frozen glass material in channel 20 and space 50 described above to re-melt. The electrode is then pushed forward, farther into the molten glass material. Viscous drag pulls molten glass material from the interstitial regions, so typically the electrode is pushed farther than required, then withdrawn to pull molten glass material back into channel 20 and space 50. Once the electrode is positioned as desired, cooling is reinstated and the glass again freezes within the interstitial regions to form a glass seal that prevents oxygen contained within the molten glass from contacting the electrode and/or the electrode holder. In some embodiments a non-oxidizing atmosphere may be established within channel 20 between inner wall 14 and electrode 22 by flowing an oxygen-free gas, such as nitrogen, or an inert gas (e.g. helium, krypton, argon or xenon) through inlet 41. Gas entering into channel 20 can escape either through the front (into the molten glass) or through the rear of channel 20 (into the ambient atmosphere).

From the foregoing and FIGS. 2 and 3, it is clear that nose member 16 comes into direct contact with molten glass at least during the initial stages of the melting process, and typically periodically throughout a production campaign. The molten glass material may be equal to or greater than 1000°C, equal to or greater than 1100°C, equal to or greater than 1200°C, equal to or greater than 1300°C, equal to or greater than 1400°C, equal to or greater than 1520°C, equal to or greater than 1540°C, equal to or greater than 1550°C or equal to or greater than 1560°C. Refractory barrier layer 46 allows the electrode holder to operate at a higher temperature during the melting operation by preventing corrosion of the electrode holder when exposed to molten glass. Refractory barrier layer 46 can extend the electrode life and allow the electrode holder to be operated at a higher temperature that would otherwise be possible without significantly reduced lifetime. The higher the operating temperature of the electrode holder, the less energy being removed from the glass and the lower the cost of operation. The use of a refractory barrier layer is a cost effective means of extending the electrode life compared with using more exotic and expensive construction materials for the electrode holder.

## Claims

1. An electrode holder (10) for a glass melting furnace comprising:
an outer wall (12);
an inner wall (14) defining a channel (20) for receiving an electrode;
a passage for receiving a flow of a coolant positioned between the outer wall and the inner wall; and
a nose member (16) joining the inner wall and the outer wall at a first end of the electrode holder,
wherein the electrode holder is **characterized in that** it further comprises a refractory barrier layer (46) deposited on an outer surface of the nose member, wherein the refractory barrier layer extends along a portion of the inner wall.

2. The electrode holder according to claim 1, wherein the refractory barrier layer comprises zirconia or alumina.

3. The electrode holder according to claim 1 or 2, wherein a thickness of the refractory barrier layer is equal to or greater than 100 µm.

4. The electrode holder according to any preceding claim, wherein a difference between a coefficient of thermal expansion of the barrier layer and a coefficient of thermal expansion of the annular nose member is no greater than an order of magnitude.

5. A furnace (52) comprising:
a refractory block (44) defining a passage therethrough; and
the electrode holder (10) according to any preceding claim positioned within the passage
wherein optionally the nose member is an annular nose member.

6. The furnace according to claim 5, wherein the refractory barrier layer (46) is in contact with a molten glass material (48).

7. The furnace according to any claim 5 or 6, wherein the refractory barrier layer (46) is deposited on at least a portion of the inner wall (14) of the electrode holder (10).

8. A method of forming a molten glass material comprising:
heating a molten glass material in a vessel, the heating comprising flowing an electric current through an electrode (22) positioned within an electrode holder (10) according to claim 1; and
flowing an oxygen-free gas between the inner wall (14) and the electrode during the heating.

## Patentansprüche

1. Elektrodenhalter (10) für einen Glasschmelzofen, der Folgendes umfasst:
eine äußere Wand (12),
eine innere Wand (14), die einen Kanal (20) zur Aufnahme einer Elektrode,
einen Durchlauf zur Aufnahme eines Kühlflusses, der sich zwischen der äußeren Wand und der inneren Wand befindet, und
ein Nasenelement (16), das die innere Wand und die äußere Wand an einem ersten Ende des Elektrodenhalters verbindet,
wobei der Elektrodenhalter **dadurch gekennzeichnet ist, dass** er weiterhin eine feuerfeste Sperrschicht (46) umfasst, die auf eine äußere Oberfläche des Nasenelements aufgebracht ist, wobei die feuerfeste Sperrschicht sich entlang eines Teils der inneren Wand erstreckt.

2. Elektrodenhalter nach Anspruch 1, wobei die feuerfeste Sperrschicht Zirconium- oder Aluminiumoxid umfasst.

3. Elektrodenhalter nach Anspruch 1 oder 2, wobei die Dicke der feuerfesten Sperrschicht 100 µm oder mehr beträgt.

4. Elektrodenhalter nach einem der vorhergehenden Ansprüche, wobei die Differenz zwischen dem Wärmeausdehnungskoeffizienten der Sperrschicht und dem Wärmeausdehnungskoeffizienten des ringförmigen Nasenelements eine Größenordnung nicht überschreitet.

5. Ofen (52), der Folgendes umfasst:
einen feuerfesten Block (44), der einen Durchlauf durch ihn hindurch definiert und
den Elektrodenhalter (10) nach einem der vorhergehenden Ansprüche, der sich in dem Durchlauf befindet,
wobei optional das Nasenelement ein ringförmiges Nasenelement ist.

6. Ofen nach Anspruch 5, wobei die feuerfeste Sperrschicht (46) sich in Kontakt mit einem geschmolzenen Glasmaterial (48) befindet.

7. Ofen nach einem der Ansprüche 5 oder 6, wobei die feuerfeste Sperrschicht (46) zumindest an einem Teil der inneren Wand (14) des Elektrodenhalters (10) aufgebracht ist.

8. Verfahren zur Herstellung eines geschmolzenen Glasmaterials, das folgende Schritte umfasst:
Erhitzen eines geschmolzenen Glasmaterials in einem Behälter, wobei das Erhitzen den Durchfluss von elektrischem Strom durch eine Elektrode (22) umfasst, die sich in einem Elektrodenhalter (10) nach Anspruch 1 befindet und
Strömen eines sauerstofffreien Gases zwischen der inneren Wand (14) und der Elektrode während des Erhitzens.

## Revendications

1. Support d'électrode (10) pour un four de fusion de verre comprenant :
une paroi externe (12) ;
une paroi interne (14) définissant un canal (20) permettant la réception d'une électrode ;
un passage permettant de recevoir un flux de fluide de refroidissement positionné entre la paroi externe et la paroi interne ; et
un élément nez (16) reliant la paroi interne et la paroi externe au niveau d'une première extrémité du support d'électrode,
ledit support d'électrode étant **caractérisé en ce qu'**il comprend en outre une couche barrière réfractaire (46) déposée sur une surface externe de l'élément nez, ladite couche barrière réfractaire s'étendant le long d'une partie de la paroi interne.

2. Support d'électrode selon la revendication 1, ladite couche barrière réfractaire comprenant de la zircone ou de l'alumine.

3. Support d'électrode selon la revendication 1 ou 2, une épaisseur de la couche barrière réfractaire étant supérieure ou égale à 100 µm.

4. Support d'électrode selon l'une quelconque des revendications précédentes, une différence entre un coefficient de dilatation thermique de la couche barrière et un coefficient de dilatation thermique de l'élément nez annulaire n'étant pas supérieure à un ordre de grandeur.

5. Four (52) comprenant :
un bloc réfractaire (44) définissant un passage à travers celui-ci ; et
le support d'électrode (10) selon l'une quelconque des revendications précédentes positionné à l'intérieur dudit passage, éventuellement ledit élément nez étant un élément nez annulaire.

6. Four selon la revendication 5, ladite couche barrière réfractaire (46) étant en contact avec un matériau de verre fondu (48).

7. Four selon la revendication 5 ou 6, ladite couche barrière réfractaire (46) étant déposée sur au moins une partie de la paroi interne (14) du support d'électrode (10).

8. Procédé de formation d'un matériau de verre fondu comprenant :
le chauffage d'un matériau de verre fondu dans un récipient, le chauffage comprenant le passage d'un courant électrique à travers une électrode (22) positionnée à l'intérieur d'un support d'électrode (10) selon la revendication 1 ; et
l'écoulement d'un gaz exempt d'oxygène entre la paroi interne (14) et l'électrode durant le chauffage.
